# EUROPEAN PATENT SPECIFICATION

(11) **EP 2 538 496 B1**
(45) Date of publication and mention of the grant of the patent: **12.11.2014**
(21) Application number: 11170949.9
(22) Date of filing: 22.06.2011
(51) Int. Cl.: H01R 13/516, H01R 13/52, H01R 24/38, F16F 9/46, H01R 13/533

(54) **Electrical connection system for a strut rod**
Elektrisches Verbindungssystem für einen Stoßdämpfer
Système de connexion électrique pour un amortisseur

(43) Date of publication of application: 26.12.2012
(73) Proprietor: Delphi Technologies, Inc., Troy, MI 48007 (US)
(72) Inventor: Grudzewski, Michal, 31-515 Krakow (PL); Siwek, Bartlomiej, 30/348 Krakow (PL); Pilczuk, Piotr, 30-838 Krakow (PL)
(74) Representative: Robert, Vincent

(56) References cited:
- EP-A2- 0 503 380
- US-A- 4 789 343
- US-A- 6 036 500

## Description

### TECHNICAL FIELD

The present invention relates generally to an electrical connection system for a strut rod.

### BACKGROUND OF THE INVENTION

The present invention relates more particularly to adjustable ride struts, wherein an electrically actuated member within the strut changes ride characteristics of the strut responsive to electricity entering into the strut. More particularly, the present invention is an electrical connection system for electrically connecting a ride strut to a source of electricity, wherein the electrical connection is not subject to environmental degradation and is readily serviceable.

Adjustable ride struts provide adaptability for a motor vehicle with respect to road and vehicular conditions. An example of an adjustable ride strut is a shock absorber having an internal solenoid which, depending upon electrical actuation of the solenoid, controls the operational characteristics of the shock absorber. In this regard, an axial bore is provided in the strut, wherein an electrically insulated pin is resident therein. An electrical terminal is used to connect the pin with the strut, wherein the strut serves as a ground path.

Electrical connection to a strut is difficult for a number of automotive related reasons. For example, environmental exposure will degrade exposed or inadequately sealed connections and vibration can loosen or disconnect connections. Hard wiring a strut connection is not a viable option, in that such a connection is not serviceable.

A known strut connector utilizes a three-way electrical connector which requires indexing, additional connector attachment features and routes all circuits through the axial bore of the strut rod. Connector alignment is a significant concern with regard to this strut connector, since bent pins are a common problem which can result in an unusable shock absorber.

Another known strut connector, as for example the one disclosed in document US6036500, utilizes the strut rod for grounding function. For this purpose, the strut rod has to have specially prepared electrical contact surface with plating to mate with a custom-designed grounding terminal of a harness connector. Because of the presence of this electrical contact surface on the strut rod, it is required during shock absorber assembly, to take care very cautiously of the strut rod in order not to deteriorate this surface. EP0503380 discloses another known strut connector adapted for connecting an electronic control system to an adjustable automotive suspension component.

Additionally, current connection systems usually require a specific orientation during assembly, both for the strut connector and for the harness connector, which makes the assembly operations somewhat complex.

Another drawback of current connection systems is the fact that they incorporate long and thin parts, like connection pins, which have to be inserted inside the strut rod to mate with a corresponding receiving part. These parts can be easily broken or deteriorated during assembly/ disassembly of the connection system, for example when the harness connector is disconnected from the strut connector.

Accordingly, what is needed is an electrical connection system for a strut rod which is sealed, unaffected by vibration, and easily serviced, while still providing a reliable electrical connection.

### SUMMARY OF THE INVENTION

The present invention proposes to solve the above mentioned problem by providing an electrical connection system for a strut rod comprising:
- a strut rod having a substantially tubular end portion,
- a fixed electrical connector attached to the strut rod, said fixed connector having a first 2-way coaxial terminal extending axially in the strut rod tubular end portion,
- a harness electrical connector attached to the free end of a harness cable in order to be removably connected to the fixed connector, said harness connector having a second 2-way coaxial terminal complementary to said first 2-way coaxial terminal,
- a tubular housing being mounted over the harness connector and mechanically connected to said strut rod tubular end portion in order to maintain said harness connector electrically connected to said fixed connector;
characterized by an elastomeric tubular seal being arranged radially between said tubular housing and the harness connector, said tubular seal being elastically compressible to allow relative tilting of the tubular housing with regards to the axis of said harness connector.

Thanks to the invention, the connection to the ground is more reliable and simpler since it is no more required to use neither a specific ground terminal nor a specific electrical contact surface with a coating on the strut rod. The grounding function is no more provided by the strut rod structure itself. This limits the risks for grounding malfunction due to corrosion, or electromagnetic interferences.

According to other advantageous features of the present invention:
- said tubular seal has a collar portion comprising two opposed radial surface delimiting a peripheral external groove for receiving a complementary internal flange of the tubular housing such that the tubular seal is axially retained in the tubular housing;
- said tubular housing has snap-fitting means for its mechanical connection to the strut rod end portion;
- said strut rod end portion is provided with a fixing nut having complementary snap-fitting means to the tubular housing snap-fitting means;
- said harness connector has an insert portion comprising a substantially cylindrical main portion and by said tubular seal being press-fitted onto said main portion;
- said tubular seal comprises at least one circumferential sealing rib which engages a corresponding axial surface of the strut rod end portion to ensure sealing between the outside and the inside of the strut rod end portion;
- a lock ring is mounted onto the tubular housing and has attachment means in order to secure the harness connector to the strut rod end portion;
- a connector position assurance ring is mounted onto the lock ring, said connector position assurance ring being rotatable relative to said lock ring between an unlocked position wherein it allows the lock ring to be disconnected from the end portion of the strut rod, and a locked position wherein it prevents disconnection of the lock ring;
- said end portion of the strut rod comprises a circumferential connecting groove and said lock ring comprises attaching lugs which are received in the connecting groove in the locked position.

### BRIEF DESCRIPTION OF THE DRAWINGS

The present invention is now described by way of example with reference to the accompanying drawings in which:
- figure 1 is an exploded perspective view showing a strut rod equipped with an electrical connection system according to a first embodiment of the present invention;
- figure 2 is an axial cross section view showing the electrical connection system of figure 1;
- figure 3 is a perspective view showing a tubular seal pertaining to the electrical connection system of figure 1;
- figure 4 is a view similar to the one of figure 2 wherein the tubular housing of the electrical connection system is tilted with regards to the strut rod axis;
- figure 5 is an exploded perspective view similar to the one of figure 1 showing a strut rod equipped with an electrical connection system according to a second embodiment of the present invention;
- figure 6 is a side view showing the electrical connection system of figure 5;
- figure 7 is an axial cross section view according to 7-7 showing the electrical connection system of figure 5;
- figure 8 is a perspective view showing a tubular seal pertaining to the electrical connection system of figure 5.

### DESCRIPTION OF THE PREFERRED EMBODIMENTS

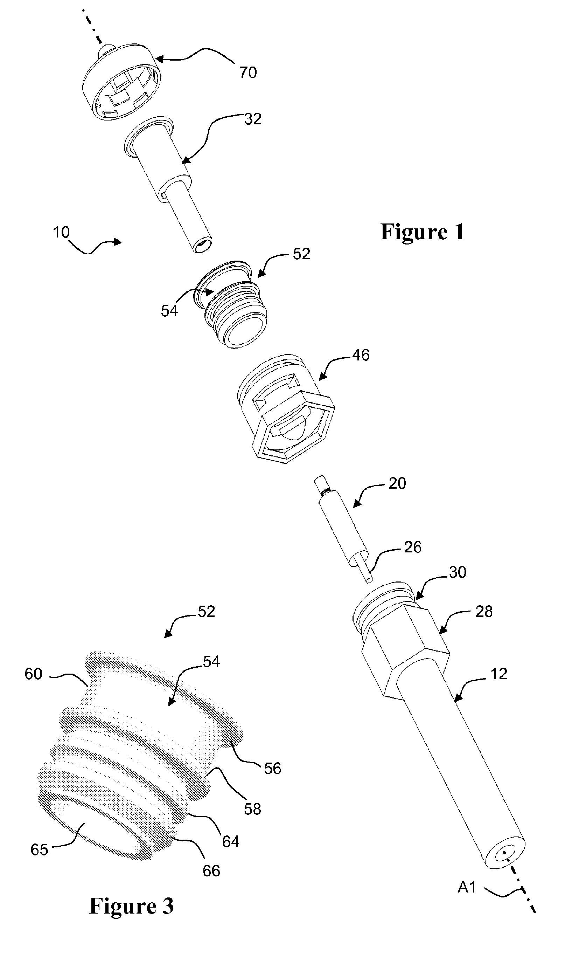

Referring now to figures 1 to 4, an electrical connection system 10 according to a first embodiment of the present invention is shown. This system is designed for connection of a strut rod 12, or shock absorber tube, to a source of electricity 14. More particularly, for connection of a strut rod electrical device to the source of electricity 14.

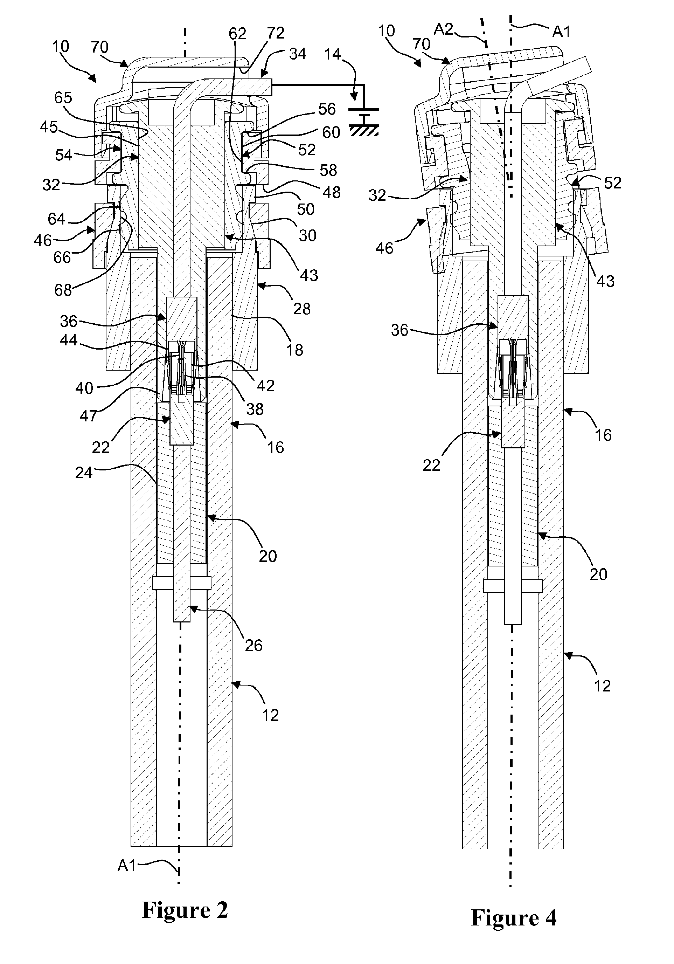

In the following description, for the sake of better understanding of the invention, an axial orientation will be used according to the strut rod axis A1, from the bottom to the top considering figure 2.

As shown more particularly on figure 2, the strut rod 12 has a substantially tubular end portion 16 provided with a threaded portion 18 on its outer peripheral surface and provided with a fixed electrical connector 20 having a first 2-way coaxial terminal 22 extending axially within the axial bore 24 defined by the tubular end portion 16. According to the present embodiment, the first terminal 22 is located in a downwardly shifted position from the opening end of the strut rod 12 such as to delimit upwardly a hollow portion within the tubular end portion 16. The bottom end of the first terminal 22 is connected to a coaxial cable 26 which extends downwardly into the axial bore 24. Said coaxial cable 26 is connected at its opposed end (not shown), for example to an electrically actuable member (not shown) such as an electromagnetically controlled valve.

Alternatively, a double-core cable could be used in place of the coaxial cable 26.

According to the embodiment shown, said tubular end portion 16 is provided with a fixing nut 28 which is screwed on the threaded portion 18. Said fixing nut 28 has an upwardly extending mounting collar 30.

A harness electrical connector 32 is attached to the free end of a harness cable 34 in order to be removably connected to the fixed connector 20. Said harness cable 34 is made of a coaxial cable and said harness connector 32 has a second 2-way coaxial terminal 36 complementary to said first 2-way coaxial terminal 22. Thus, the harness connector 32 interfaces with the fixed connector 20 through a coaxial connection.

According to said coaxial connection, each 2-way coaxial terminal 22, 36 comprises an inner connection pin 38, 40 and an outer connection sleeve 42, 44 respectively connected to the center core and the metallic shield of the corresponding coaxial cables 26, 34.

In case the cables 26, 34 are double-core cables instead of coaxial cables, then each 2-way coaxial terminal 22, 36 is connected accordingly to both cores of the cable.

According to the present embodiment, the harness connector 32 comprises an insert portion 43 including in its upper part a main portion 45 substantially cylindrical and in its lower part a connector portion 47 forming a tubular receptacle for receiving said second terminal 36.

Advantageously, a tubular housing 46 of substantially sleeve shape is mounted over the harness connector 32 and mechanically connected to said strut rod tubular end portion 16 in order to maintain said harness connector 32 electrically connected to said fixed connector 20. More particularly, in the present embodiment, the tubular housing 46 has snap-fitting means 48, here constituted of a slit, complementary to snap-fitting means 50, here constituted of a lip, arranged on the mounting collar 30.

According to an advantageous feature of the invention, an elastomeric tubular seal 52 is arranged radially between said tubular housing 46 and the harness connector 32. Said tubular seal 52 is elastically compressible to allow relative tilting of the tubular housing 46 with regards to the axis of said harness connector 32, corresponding here to the axis A1 of the strut rod 12.

Said tubular seal 52 is press-fitted onto said insert main portion 45 thanks to the elasticity of the tubular seal 52. In the embodiment shown, the tubular seal 52 comprises, in its upper portion, a collar portion 54 having two opposed radial surfaces 56, 58 delimiting a peripheral external groove 60 for receiving a complementary internal flange 62 of the tubular housing 46 such that the tubular seal 52 is axially retained in the tubular housing 46.

Said tubular seal 52 also comprises, in its lower portion, two outer circumferential sealing ribs 64, 66 which engage a corresponding inner axial surface 68 of the mounting collar 30 in order to ensure sealing between the outside and the inside of the strut rod end portion 16.

According to alternative embodiments (not shown), the inner axial surface 68 could be located directly on the strut rod 12.

Advantageously, the tubular seal 52 has an inner axial surface 65 substantially cylindrical and complementary to the outer surface of the insert main portion 45 in order to permit press-fit mounting between the two parts.

According to the embodiment shown, a cap 70 is mounted on the top of the tubular housing 46, over the insert portion 43. Said cap 70 has a radial opening 72 forming a passageway for the harness cable 34. Of course, other shapes of cap 70 with other shapes of opening 72 could be also used.

The assembly of the connection system 10 according to the invention is now explained.

The strut rod 12 is equipped with its coaxial cable 26, the fixed connector 20, and the fixing nut 28 which is screwed on the tubular end portion 16.

The tubular housing 46 is provided with the tubular seal 52 mounted therein, the internal flange 62 of the tubular housing 46 engaging the complementary groove 60 of the tubular seal 52. Said tubular seal 52 is, for example, inserted axially and downwardly into the axial bore of the tubular housing 46.

The harness connector 32 is then inserted axially downwardly into the tubular seal 52, the main cylindrical portion 45 of the harness connector 32 sliding axially along the inner axial surface 65 of the tubular seal 52 such that the two parts are press-fitted together. The internal diameter of the tubular seal 52 can be slightly lower than the outer diameter of the insert portion 43 in order to allow press-fitting attachment between the tubular seal 52 and the insert portion 43 thanks to radial elastic deformation of the tubular seal 52.

The cap 70 can be clipped onto the harness connector 32 and the tubular housing 46 accordingly, before or after the press-fitting.

Said tubular housing 46 and said tubular seal 52 are then axially mounted onto the mounting collar 30 of the fixing nut 28, until the snap-fitting means 48, 50 cooperate together for attaching the tubular housing 46 and the tubular seal 52 to the mounting collar 30.

At this stage of the electrical connection system 10 assembly, the assembly of the harness connector 32 with the tubular housing 46 and the tubular seal 52 is ready for electrical connection to the fixed connector 20 of the strut rod 12. The electrical connection and mechanical assembly of these parts to the strut rod 12 are then done by positioning the tubular housing 46 above the end portion 16 of the strut rod 12 and by moving axially downward the tubular housing 46 in order to secure the assembly to the mounting collar 30 thanks to said snap-fitting means 48, 50.

At the end of this stage, when the tubular housing 46 is snap-fitted to the mounting collar 30, the first and second 2-way coaxial terminal 22, 36 interface together and establish the electrical connection.

Referring now to figure 4, it is shown a tilted position of the tubular housing 46, i.e. an intermediate position during mounting operations or dismounting operations of the connection system 10 wherein the tubular housing 46 axis A2 is tilted with regards to the strut axis A1. As it is shown, for example for service, an operator may want to dismount the tubular housing 46 in order to disconnect the harness connector 32 from the fixed connector 20. During this dismounting operation, the tubular housing 46 may be tilted with regards to the strut axis A1 which could create stresses on the terminals 22, 36 or insert portion 43 such as side forces. Thanks to the invention, the tubular seal 52 compensates for the tilting by being radially compressed, on the right side considering the example of figure 4. This feature dramatically decreases risk of connector breakage during coupling or uncoupling from the strut rod 12.

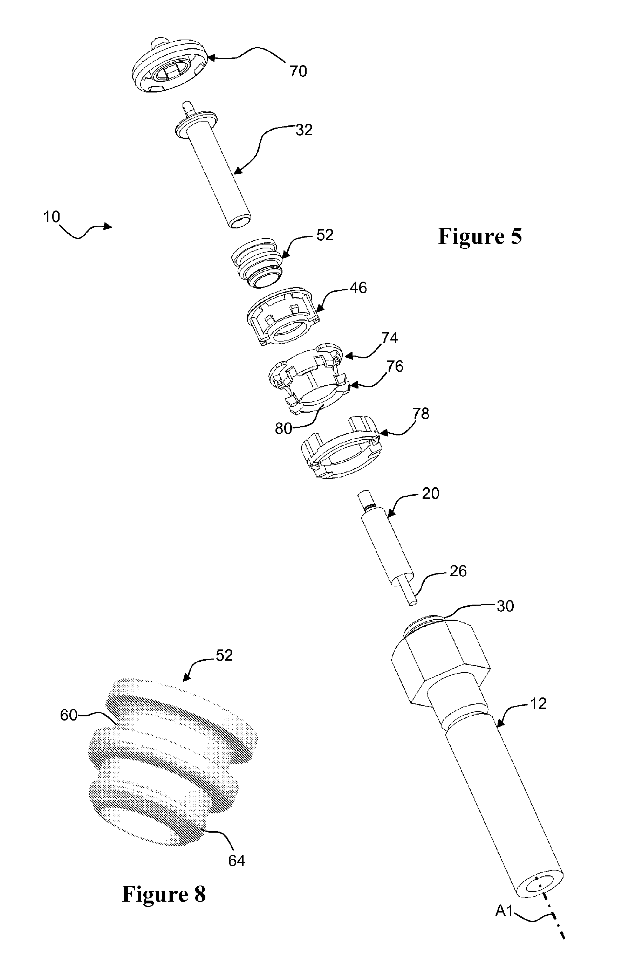

Referring now to figures 5 to 8, a second embodiment of the electrical connection system 10 according to the present invention is shown. Same references will be used for similar parts and only the main differences with regards to the first embodiment will be described.

The second embodiment essentially differs from the first embodiment by the way the harness connector 32 is secured to the strut rod end portion 16. Instead of having the mounting collar 30 on the fixing nut 28, said mounting collar 30 is formed on the strut rod end portion 16.

A lock ring 74, which is mounted onto the tubular housing 46, comprises attachment means 76 in order to secure the harness connector 32 onto the mounting collar 30 of the strut rod end portion 16. In the embodiment shown, the attachment means 76 comprises two opposed flexible radial lugs 80, or ribs, which cooperate with the lip 50 of the mounting collar 30 to retain axially the tubular housing 46 on the mounting collar 30. Here the mounting collar 30 has a circumferential connecting groove 82 below the lip 50 and the flexible radial lugs 80 are received in the connecting groove 82 in the locked position.

Attachment means, such as lugs, are provided between the tubular housing 46 and the lock ring 74 in order to retain axially the two parts together. Alternatively, the lock ring 74 could be made integral with the tubular housing 46.

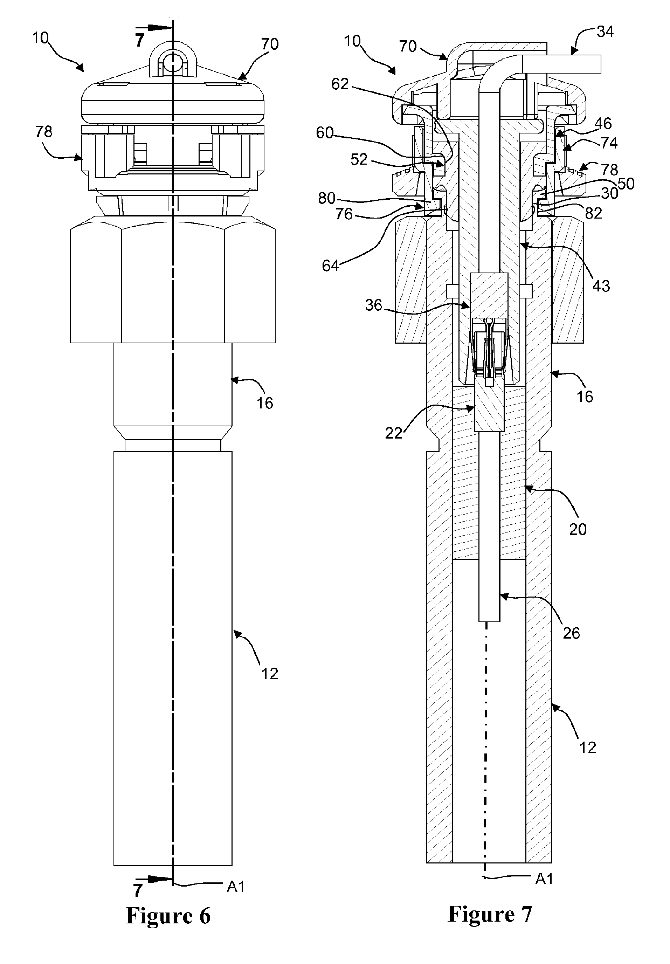

A connector position assurance ring 78 is slidably mounted onto the lock ring 74, said connector position assurance ring 78 being axially slidable relative to said lock ring 74 between an upper unlocked position wherein it allows the lock ring 74 to be disconnected from the mounting collar 30, and a lower locked position, which is shown on figure 6 and 7, wherein it prevents disconnection of the lock ring 74 by blocking the flexible radial lugs 80 in their locked position.

Alternatively, the connector position assurance ring 78 could be pivotally mounted onto the lock ring 74 between two angular positions corresponding respectively to locked and unlocked positions.

According to the embodiment shown, the tubular seal 52 comprises one single seal rib 64 at its lower extremity.

The assembly of the connection system 10 according to the second embodiment is substantially the same as the one for the first embodiment. There are additional steps corresponding to the coupling of the tubular housing 46 with the lock ring 74 and with the connector position assurance ring 78. There are also additional locking/unlocking steps corresponding to the axial sliding of the connector position assurance ring 78 between its locked and unlocked positions.

Of course, various other embodiments of the electrical connection system 10 of the invention could be implemented, including combination of features from the first and second embodiments. Other attachments means, and/or different shapes for the tubular housing, for the tubular seal, for the mounting collar could be implemented also.

## Claims

1. Electrical connection system (10) for a strut rod (12) comprising:
- a strut rod (12) having a substantially tubular end portion (16),
- a fixed electrical connector (20) attached to the strut rod (12), said fixed connector (20) having a first 2-way coaxial terminal (22) extending axially in the strut rod tubular end portion (16 ),
- a harness electrical connector (32) attached to the free end of a harness cable (34) in order to be removably connected to the fixed connector (20), said harness connector (32) having a second 2-way coaxial terminal (36) complementary to said first 2-way coaxial terminal (22);
- a tubular housing (46) being mounted over the harness connector (32) and mechanically connected to said strut rod tubular end portion (16) in order to maintain said harness connector (32) electrically connected to said fixed connector (20); and
**characterized by** an elastomeric tubular seal (52) being arranged radially between said tubular housing (46) and the harness connector (32), said tubular seal (52) being elastically compressible to allow relative tilting of the tubular housing (46) with regards to the axis (A1) of said harness connector (32).

2. Electrical connection system (10) according to the preceding claim, **characterized by** said tubular seal (52) having a collar portion (54) comprising two opposed radial surfaces (56, 58) delimiting a peripheral external groove (60) for receiving a complementary internal flange (62) of the tubular housing (46) such that the tubular seal (52) is axially retained in the tubular housing (46).

3. Electrical connection system (10) according to claim 1 or 2, **characterized by** said tubular housing (46) having snap-fitting means (48) for its mechanical connection to the strut rod end portion (16).

4. Electrical connection system (10) according to the preceding claim, **characterized by** said strut rod end portion (16) being provided with a fixing nut (28) having complementary snap-fitting means (50) to the tubular housing snap-fitting means (48).

5. Electrical connection system (10) according to anyone of the preceding claims, **characterized by** said harness connector (32) having an insert portion (43) comprising a substantially cylindrical main portion (45) and by said tubular seal (52) being press-fitted onto said main portion (45).

6. Electrical connection system (10) according to anyone of the preceding claims, **characterized by** said tubular seal (52) comprising at least one circumferential sealing rib (64, 66) which engages a corresponding axial surface of the strut rod end portion (16) to ensure sealing between the outside and the inside of the strut rod end portion (16).

7. Electrical connection system (10) according to anyone of the preceding claims, **characterized by** a lock ring (74) being mounted onto the tubular housing (46) and having attachment means (76) in order to secure the harness connector (32) to the strut rod end portion (16).

8. Electrical connection system (10) according to the preceding claim, **characterized by** a connector position assurance ring (78) being mounted onto the lock ring (74), said connector position assurance ring (78) being movable relative to said lock ring (74) between an unlocked position wherein it allows the lock ring (74) to be disconnected from the end portion (16) of the strut rod (12), and a locked position wherein it prevents disconnection of the lock ring (74).

9. Electrical connection system (10) according to claim 7 or 8, **characterized by** said end portion (16) of the strut rod (12) comprising a circumferential connecting groove (82) and said lock ring (74) comprising attaching lugs (80) which are received in the connecting groove (82) in the locked position.

## Patentansprüche

1. Elektrisches Verbindungssystem (10) für ein Dämpfergestänge (12), das aufweist:
- ein Dämpfergestänge (12) mit einem im Wesentlichen rohrförmigen Endteil (16),
- einen festen elektrischen Verbinder (20), der an dem Dämpfergestänge (12) angebracht ist, wobei der feste Verbinder (20) einen ersten Zweiweg-Koaxialanschluss (22) hat, der sich axial in dem rohrförmigen Endteil (16) des Dämpfergestänges erstreckt,
- einen elektrischen Kabelstrang-Verbinder (32), der an dem freien Ende eines Kabelstrangs (34) angebracht ist, um entfernbar mit dem festen Verbinder (20) verbunden zu werden,
wobei der Kabelstrang-Verbinder (32) einen zweiten Zweiweg-Koaxialanschluss (36) hat, der komplementär zu dem ersten Zweiweg-Koaxialanschluss (22) ist;
ein rohrförmiges Gehäuse (46), das über dem Kabelstrang-Verbinder (32) angebracht ist und mechanisch mit dem rohrförmigen Endteil (16) des Dämpfergestänges verbunden ist, um den Kabelstrang-Verbinder (32) elektrisch verbunden mit dem festen Verbinder (20) zu halten; und
**gekennzeichnet durch** eine elastomere rohrförmige Dichtung (52), die radial zwischen dem rohrförmigen Gehäuse (46) und dem Kabelstrang-Verbinder (32) angeordnet ist, wobei die rohrförmige Dichtung (52) elastisch komprimierbar ist, um ein relatives Neigen des rohrförmigen Gehäuses (46) in Bezug auf die Achse (A1) des Kabelstrang-Verbinders (32) zu ermöglichen.

2. Elektrisches Verbindungssystem (10) gemäß dem vorhergehenden Anspruch, **dadurch gekennzeichnet, dass** die rohrförmige Dichtung (52) einen Kragenteil (54) hat, der zwei gegenüberliegende radiale Oberflächen (56, 58) aufweist, die eine periphere externe Rille (60) begrenzen zum Aufnehmen eines komplementären internen Flansches (62) des rohrförmigen Gehäuses (46) derart, dass die rohrförmige Dichtung (52) axial in dem rohrförmigen Gehäuse (46) gehalten wird.

3. Elektrisches Verbindungssystem (10) gemäß Anspruch 1 oder 2, **dadurch gekennzeichnet, dass** das rohrförmige Gehäuse (46) Schnapp-Mittel (48) hat für seine mechanische Verbindung mit dem Endteil (16) der Federbeinstange.

4. Elektrisches Verbindungssystem (10) gemäß dem vorhergehenden Anspruch, **dadurch gekennzeichnet, dass** der Endteil (16) des Dämpfergestänges mit einer Befestigungsmutter (28) versehen ist, die komplementäre Schnapp-Mittel (50) zu den Schnapp-Mitteln (48) des rohrförmigen Gehäuses hat.

5. Elektrisches Verbindungssystem (10) gemäß einem der vorhergehenden Ansprüche, **dadurch gekennzeichnet, dass** der Kabelstrang-Verbinder (32) einen Einfügeteil (43) hat, der einen im Wesentlichen zylindrischen Hauptteil (45) aufweist und durch die rohrförmige Dichtung (52) auf den Hauptteil (45) eingepresst wird.

6. Elektrisches Verbindungssystem (10) gemäß einem der vorhergehenden Ansprüche, **dadurch gekennzeichnet, dass** die rohrförmige Dichtung (52) zumindest eine umlaufende Dichtungsrippe (64, 66) aufweist, die eine entsprechende axiale Oberfläche des Endteils (16) des Dämpfergestänges kontaktiert, um eine Abdichtung zwischen der Außenseite und der Innenseite des Endteils (16) des Dämpfergestänges sicherzustellen.

7. Elektrisches Verbindungssystem (10) gemäß einem der vorhergehenden Ansprüche, **dadurch gekennzeichnet, dass** ein Verriegelungsring (74) auf dem rohrförmigen Gehäuse (46) angebracht ist und Befestigungsmittel (76) hat, um den Kabelstrang-Verbinder (32) an dem Endteil (16) des Dämpfergestänges zu befestigen.

8. Elektrisches Verbindungssystem (10) gemäß dem vorhergehenden Anspruch, **dadurch gekennzeichnet, dass** ein Verbinderpositionssicherungsring (78) auf dem Verriegelungsring (74) angebracht ist, wobei der Verbinderpositionssicherungsring (78) relativ zu dem Verriegelungsring (74) zwischen einer entriegelten Position, in der ermöglicht wird, dass der Verriegelungsring (74) von dem Endteil (16) des Dämpfergestänges (12) getrennt wird, und einer verriegelten Position bewegbar ist, in der eine Trennung des Verriegelungsrings (74) verhindert wird.

9. Elektrisches Verbindungssystem (10) gemäß Anspruch 7 oder 8, **dadurch gekennzeichnet, dass** der Endteil (16) des Dämpfergestänges (12) eine Umfangsverbindungsrille (82) aufweist und der Verriegelungsring (74) Befestigungsvorsprünge (80) aufweist, die in der Verbindungsrille (82) in der verriegelten Position aufgenommen werden.

## Revendications

1. Système de connexion électrique (10) pour une barre entretoise (12) comprenant :
- une barre entretoise (12) ayant une portion terminale sensiblement tubulaire (16),
- un connecteur électrique fixe (20) attaché à la barre entretoise (12), ledit connecteur fixe (20) ayant un premier terminal coaxial à deux voies (22) s'étendant axialement dans la portion terminale tubulaire (16) de la barre entretoise,
- un connecteur électrique de faisceau (32) attaché à l'extrémité libre d'un câble en faisceau (34) afin d'être connecté de manière amovible au connecteur fixe (20), ledit connecteur de faisceau (32) ayant un second terminal coaxial à deux voies (36) complémentaire dudit premier terminal coaxial à deux voies (22) ;
- un boîtier tubulaire (46) qui est monté par-dessus le connecteur de faisceau (32) et qui est connecté mécaniquement à ladite portion terminale tubulaire (16) de la barre entretoise afin de maintenir ledit connecteur de faisceau (32) électriquement connecté audit connecteur fixe (20) ; et
**caractérisé par** un joint tubulaire en élastomère (52) agencé radialement entre ledit boîtier tubulaire (46) et le connecteur de faisceau (32), ledit joint tubulaire (52) étant élastiquement compressible pour permettre un basculement relatif du boîtier tubulaire (46) par rapport à l'axe (A1) dudit connecteur de faisceau (32).

2. Système de connexion électrique (10) selon la revendication précédente, **caractérisé en ce que** ledit joint tubulaire (52) comprend une portion en collier (54) comprenant deux surfaces radiales opposées (56, 58) qui délimitent une gorge externe périphérique (60) pour recevoir une bride interne complémentaire (62) du boîtier tubulaire (46) de telle façon que le joint tubulaire (52) est retenu axialement dans le boîtier tubulaire (46).

3. Système de connexion électrique (10) selon la revendication 1 ou 2, **caractérisé en ce que** ledit boîtier tubulaire (46) comprend des moyens d'encliquetage (48) pour sa connexion mécanique à la portion terminale (16) de la barre entretoise.

4. Système de connexion électrique (10) selon la revendication précédente, **caractérisé en ce que** ladite portion terminale (16) de la barre entretoise est dotée d'un écrou de fixation (28) ayant des moyens d'encliquetage complémentaires (50) aux moyens d'encliquetage (48) du boîtier tubulaire.

5. Système de connexion électrique (10) selon l'une quelconque des revendications précédentes, **caractérisé en ce que** ledit connecteur de faisceau (32) comprend une portion d'insert (43) comprenant une portion principale sensiblement cylindrique (45), et **en ce que** ledit joint tubulaire (52) est assemblé à la presse sur ladite portion principale (45).

6. Système de connexion électrique (10) selon l'une quelconque des revendications précédentes, **caractérisé en ce que** ledit joint tubulaire (52) comprend au moins une nervure d'étanchéité circonférentielle (64, 66) qui engage une surface axiale correspondante de la portion terminale (16) de la barre entretoise pour assurer une étanchéité entre l'extérieur et l'intérieur de la portion terminale (16) de la barre entretoise.

7. Système de connexion électrique (10) selon l'une quelconque des revendications précédentes, **caractérisé en ce qu'**une bague de blocage (74) est montée sur le boîtier tubulaire (46) et comprend des moyens d'attache (76) afin de fixer le connecteur de faisceau (32) sur la portion terminale (16) de la barre entretoise.

8. Système de connexion électrique (10) selon la revendication précédente, **caractérisé par** une bague de sécurisation de position pour connecteur (78) qui est montée sur la bague de blocage (74), ladite bague de sécurisation de position pour connecteur (78) étant déplaçable par rapport à ladite bague de blocage (74) entre une position débloquée dans laquelle elle permet à la bague de blocage (74) d'être déconnectée depuis la portion terminale (16) de la barre entretoise (12), et une position bloquée dans laquelle elle empêche une déconnexion de la bague de blocage (74)

9. Système de connexion électrique (10) selon la revendication 7 ou 8, **caractérisé en ce que** ladite portion terminale (16) de la barre entretoise (12) comprend une gorge de connexion circonférentielle (82) et ladite bague de blocage (74) comprend des pattes d'attache (80) qui sont reçues dans la gorge de connexion (82) dans la position bloquée.
